# EUROPÄISCHE PATENTSCHRIFT

(11) **EP 0 869 649 B1**
(45) Veröffentlichungstag und Bekanntmachung des Hinweises auf die Patenterteilung: **10.09.2003**
(21) Anmeldenummer: 98103876.3
(22) Anmeldetag: 05.03.1998
(51) Int. Cl.: H04L 27/34

(54) **Modulation mit mehrfacher Auflösung**
Multiresolution modulation
Modulation à multirésolution

(30) Priorität: 02.04.1997 DE 19713631
(43) Veröffentlichungstag der Anmeldung: 07.10.1998
(73) Patentinhaber: ROBERT BOSCH GMBH, 70442 Stuttgart (DE)
(72) Erfinder: Lauterbach, Thomas, 90475 Nürnberg (DE); Amor, Hamed, 31139 Hildesheim (DE); Ruf, Michael, 31141 Hildesheim (DE)

(56) Entgegenhaltungen:
- EP-A- 0 490 552
- EP-A- 0 616 454
- FAZEL K ET AL: "A CONCEPT OF DIGITAL TERRESTRIAL TELEVISION BROADCASTING" , WIRELESS PERSONAL COMMUNICATIONS, KLUWER ACADEMIC PUBLISHERS, NL, VOL. 2, NR. 1/2, PAGE(S) 9-27 XP000589609 ISSN: 0929-6212 * Zusammenfassung * * Seite 14, Zeile 30 - Seite 18, Zeile 12 * * Abbildungen 2-4 *
- KANNAN RAMCHANDRAN: "MULTIRESOLUTION BROADCAST FOR DIGITAL HDTV USING JOINT SOURCE/ CHANNEL CODING" , IEEE JOURNAL ON SELECTED AREAS IN COMMUNICATIONS, IEEE INC. NEW YORK, US, VOL. 11, NR. 1, PAGE(S) 6-22 XP000377993 ISSN: 0733-8716 * Seite 1, rechte Spalte, Zeile 12 - Zeile 26 * * Seite 5, rechte Spalte, Zeile 11 - Seite 6, linke Spalte, Zeile 23 * * Abbildungen 6-8,17 *
- KAYS R: "KANALCODIERUNG UND MODULATION FUR DIE DIGITALE FERNSEHUBERTRAGUNG" , FERNSEH UND KINOTECHNIK, VDE VERLAG GMBH. BERLIN, DE, VOL. 48, NR. 3, PAGE(S) 109-114 XP000434275 ISSN: 0015-0142 * Seite 109, rechte Spalte, Zeile 1 - Zeile 10 * * Seite 111, rechte Spalte, Zeile 7 - Seite 112, mittlere Spalte, Zeile 6 * * Abbildungen 1,2,6 *
- BOT DE P G M ET AL: "AN EXAMPLE OF A MULTI-RESOLUTION DIGITAL TERRESTRIAL TV MODEM" , PROCEEDINGS OF THE INTERNATIONAL CONFERENCE ON COMMUNICATIONS (ICC). GENEVA, MAY 23 - 26, 1993, NEW YORK, IEEE, US, VOL. VOL. 3, PAGE(S) 1785-1790 XP000448431 ISBN: 0-7803-0950-2 * das ganze Dokument *

## Beschreibung

### Stand der Technik

Die Erfindung geht aus von einem Verfahren zur Vergrößerung der mit einem Multiträger-Übertragungsverfahren über Rundfunk übertragenen Datenrate, sowie einem Sender und einem Empfänger, insbesondere stationäre Geräte, nach der Gattung der unabhängigen Ansprüche.
Aus dem Stand der Technik ist die Übertragung von digitalen Daten nach dem ETS 300 401 bekannt, der entwickelt wurde um den mobilen Multimediaempfang über terrestrische, digitale Rundfunksysteme zu standardisieren. Dieser zunächst für den Hörfunk konzipierte Standard DAB (Digital Audio Broadcasting) eignet sich auch für die mobile Fernsehübertragung. Beim DAB-Verfahren bietet sich die Möglichkeit, die gesamte Bandbreite von 1,5 MHz für die Datenübertragung von Videodaten zur Verfügung zu stellen. So können Daten mit einer maximalen Datenrate von ungefähr 1,8 Mbit/s zum mobilen Empfänger übertragen werden. Diese Datenrate erlaubt unter Einsatz bisheriger Kompressionsverfahren (MPEG) eine gute Qualität auf Bildschirmen, wie sie bei mobilen Geräten eingesetzt werden. Da ein über DAB ausgestrahltes Fernsehprogramm auch stationär empfangen werden kann, können bei den wesentlich größeren Bildschirmdiagonalen, Kodierungseffekte, Unschärfe oder Blockbildung sichtbar werden. Für eine Darstellung auf größeren Bildschirmen ist eine größere Datenübertragungsrate notwendig. Aus "X-DAB - Eine abwärtskompatible Erweiterung des DAB-Standards für Multimediaanwendungen", Kleinheubacher Berichte, 1996, G. Zimmermann u. H. Schulze, ist eine Erweiterung des DAB-Verfahrens bekannt, wobei ein kodiertes 8-PSK-(Phase Shift Keying) Verfahren als Modulationsverfahren angewendet wird. Diese Erweiterung das sogenannte X-DAB bietet die Möglichkeit, die mobil zu empfangenden Datenraten um 20 % zu erhöhen. Das Modulationsverfahren macht es allerdings für bisher konventionelle DAB-Empfänger unmöglich, die Signale zu empfangen.

Aus EP 616 454 A1 ist ein digitales Übertragungsverfahren bekannt, das eine sogenannte Multi-Resolution-Modulation ermöglicht. Dabei können Daten mit unterschiedlichen Modulationsverfahren moduliert werden. Aus K. Ramchandran et al.: Multiresolution Broadcast for Digital HDTV Using Joint Source/Channel Coding, IEEE Journal on Selected Areas in Communications, New York, US, Vol. 11 Nr. 1, Seiten 6 bis 22 ist ebenfalls die Verwendung der Multi-Resolution-Modulation für die Übertragung von digitalen HDTV-Signalen bekannt. Auch R. Kays: Kanalcodierung und Modulation für die digitale Fernsehübertragung, Fernseh- und Kinotechnik, VDE Verlag, Berlin, Vol. 48, Nr. 3, Seiten 109 bis 114 zeigt die Verwendung einer hierarchischen Übertragung eines HDTV-Programms in einem 8 MHz-Kanal. Dabei wird eine Multi-Resolution-QAM verwendet. Aus K. Pazel et al.: A Concept of Digital Tewestrial Television Broadcasting, Wireless Personal Communications Kluwer, Vol. 2, Nr. 1 bis 2, Seiten 9 bis 27 ist es bekannt, HDTV-Signale in drei Stufen mit unterschiedlichen Codierungen bereitzustellen, um eine "graceful degradation" empfängerseitig zu ermöglichen. Damit liegt das gleiche Signal verschieden aufgelöst vor. Es können dabei Modulationsverfahren wie QPSK und QAM verwendet werden. Dies ermöglicht insbesondere Empfang durch stationäre und mobile Empfänger mit angepassten Empfangsqualitäten.

### Vorteile der Erfindung

Das erfindungsgemäße Verfahren mit den kennzeichnenden Merkmalen des Hauptanspruchs 1 hat demgegenüber den Vorteil, die übertragene Datenrate zu erhöhen, indem zwei Datenströme getrennt voneinander moduliert und anschließend vor der Übertragung kombiniert werden. Mit der zusätzlichen Modulation lassen sich die Datenraten stark steigern. Durch das erfindungsgemäße Verfahren ist es möglich, daß ein Empfänger, der nur Daten, die mit einem ersten Modulationsverfahren moduliert werden, empfangen kann, die Daten problemlos empfängt, während ein weiterer, z. B. stationärer Empfänger die Daten, die mit dem zweiten Modulationsverfahren moduliert werden, zusätzlich verarbeiten kann. Dadurch wird das Übertragungsverfahren an die im Augenblick gegebenen Modulationsverfahren angepaßt, während es gleichzeitig zusätzliche Informationen für verbesserten Empfang liefert.

Durch die in den Unteransprüchen aufgeführten Maßnahmen ist eine vorteilhafte Weiterbildung und Verbesserung des im unabhängigen Anspruch angegebenen Verfahrens möglich. Besonders vorteilhaft ist es, wenn die Daten des zweiten Teildatenstroms mit einer Amplituden-Modulation oder anderen alternativen Modulationsverfahren moduliert werden.

Vorteilhaft ist es weiterhin, daß die Daten des ersten Teildatenstroms einer DQPSK-Modulation (Differential Quadrature Phase Shift Keying) unterzogen werden. Dadurch ist es für konventionelle Empfänger des DAB-Verfahrens möglich die Daten des ersten Teildatenstroms zu empfangen.

Vorteilhafter Weise enthalten die Daten des ersten Teildatenstroms alle notwendigen Informationen, um z. B. ein Fernsehbild in einem mobilen Empfänger darzustellen. Der zweite Teildatenstrom enthält zusätzliche Informationen, die zu einer besseren Bildqualität in einem stationären Empfänger verarbeitet werden können.

Der erfindungsgemäße Sender zur Vergrößerung der übertragenen Datenrate mit den kennzeichnenden Merkmalen des unabhängigen Anspruchs 6 hat den Vorteil, daß er zusätzlich zu den Bauteilen, die ein Sender für das DAB-Verfahren aufweisen muß, einen weiteren Modulator für den zweiten Teildatenstrom enthält. Zusätzlich ist ein Kombinierer für die mit den unterschiedlichen Modulationsverfahren modulierten Teildatenströme vorhanden.

Vorteilhafter Weise ist der zweite Modulator ein Amplitudenmodulator oder ein äquivalenter Modulator.

Der erfindungsgemäße Empfänger zum Empfang von digitalen Daten mit den kennzeichnenden Merkmalen des unabhängigen Anspruchs 8 hat den Vorteil, daß er einen Abzweig für einen zweiten Teildatenstrom aufweist, in dem ein zweiter Demodulator vorhanden ist. Vorteilhafter Weise enthält der Empfänger einen Decoder, der die Teildatenströme zusammenführen kann.

### Zeichnung

Ein Ausführungsbeispiel der Erfindung ist in der Zeichnung dargestellt und in der nachfolgenden Beschreibung näher erläutert. Es zeigt Figur 1 einen erfindungsgemäßen Sender, Figur 2 einen erfindungsgemäßen Empfänger und Figur 3 eine Darstellung des erfindungsgemäßen Modulationsverfahrens.

### Beschreibung des Ausführungsbeispiels

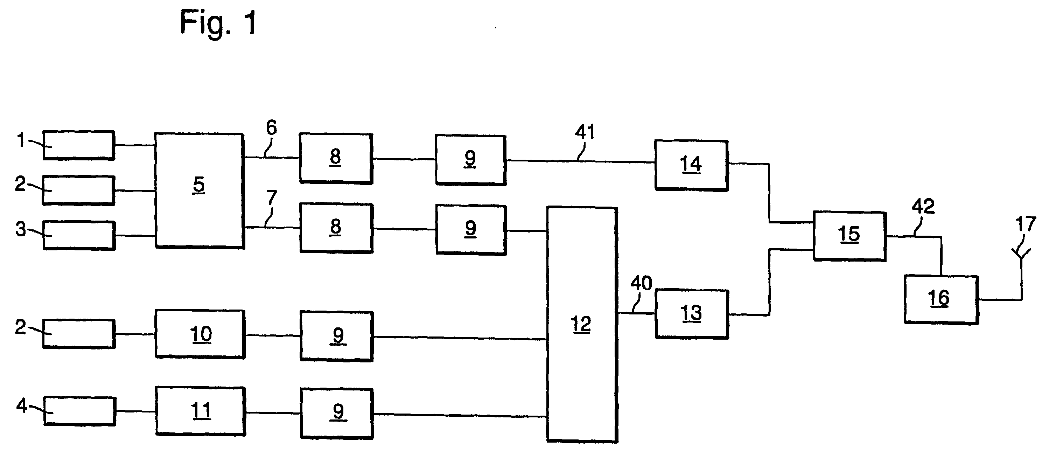

Figur 1 zeigt das Schaltungsschema für einen erfindungsgemäßen Sender. Auf der linken Seite erkennt man die verschiedenen Datenquellen bestehend aus den Videodaten 1, den Audiodaten 2, allgemeinen Daten 3 und Paketdaten 4. Video-, Audio- und sonstige Daten werden in einen MPEG-Enkoder 5 eingespeist, der die Daten in zwei Teilströme kodiert. Der erste Teilstrom 7 durchläuft einen DVB-Enkoder 8 und einen DAB-Enkoder 9. Der zweite Datenstrom 6 wird ebenfalls über den DVB-Enkoder 8 und den DAB-Enkoder geführt. Weitere Audiodaten 2 werden über einen Audioenkoder 10, den DAB-Enkoder 9 zu einem DAB-Multiplexer 12 geführt. Die Paketdaten 4 durchlaufen einen Paketmultiplexer 11, den DAB-Enkoder 9 und den DAB-Multiplexer 12. Alle Daten des ersten Teildatenstroms 40 durchlaufen eine DQPSK-Modulation 13. Der zweite Datenstrom 41 durchläuft einen Amplitudenmodulator 14 und wird in einem Kombinierer 15 mit dem Datenstrom 40 zusammengeführt. Die resultierenden Daten 42 durchlaufen einen OFDM-Generator 16 und werden über eine Antenne 17 abgestrahlt.

Das analoge Fernsehsignal liegt zunächst als Kombination aus Videodaten 1, Audiodaten 2, sowie anderen Daten 3 vor. Dieses Signal wird im MPEG-Enkoder 5 komprimiert. Das komprimierte Videosignal besteht dabei aus zwei Teildatenströmen: Dem Low-Definition-Teildatenstrom 7 für eine Basis-Bildqualität, sowie den Standarddefinition-Teildatenstrom 6, der zusammen mit dem Low-Definition-Datenstrom 7 eine verbesserte Bildqualität für einen stationären Empfänger ermöglicht. Die Datenrate der Teildatenströme richtet sich nach der möglichen Übertragungskapazität der Teilkanäle. Der Teildatenstrom 40, der für den mobilen Empfang gedacht ist, hat eine maximale Nutzdatenrate von etwa 1,8 MBit/s. Der zweite Teildatenstrom 6 für den stationären Empfänger, der zusammen mit dem für mobile Teilnehmer gesendeten Teildatenstrom 7 eine verbesserte Bildqualität auf einem großen Bildschirm ermöglicht, beträgt je nach verwendeter Kanalcodierung ebenfalls ca. 1,8 MBit/s. Beide Übertragungskanäle haben eine maximale Kapazität von ca. 2,3 MBit/s. Der für den mobilen Empfänger bestimmten Teildatenstrom 7, sowie der zusätzliche Teildatenstrom 6 werden wie bisher im DAB-Sender mit einem äußeren Fehlerschutz versehen. Dazu durchlaufen die Daten den DVB-Enkoder 8, der in mehreren Schritten den Fehlerschutz beaufschlagt, durch DVB-Energy-Dispersal, äußeren Reed-Solomon-Code und äußeren Faltungsinterleaver. Es folgen für beide Teildatenströme die im DAB-Verfahren vorgesehenen Schritte für die Übertragung im Stream-Mode. Die Daten durchlaufen den DAB-Enkoder 9 der die Schritte DAB-Energy-Dispersal, DAB-Faltungscoding und DAB-Faltungsinterleaver enthält. Im folgenden DAB-Multiplexer 12 werden die Daten des Teildatenstroms 7 mit evtl. vorhandenen zusätzlichen Audiodaten 2 oder Paketdaten 4 gemischt, und aus der Gesamtheit der Daten der DAB-Übertragungsrahmen gebildet. Der erste Datenstrom 40 durchläuft einen DQPSK (Differential Quadrature Phase Shift Keying)-Modulator mit vorgeschaltetem Frequenzinterleaving. Der für den stationären Empfänger bestimmte Datenstrom 6 durchläuft den gleichen äußeren Fehlerschutz wie der erste Datenstrom 7 sowie die DAB-Kodierung. Im folgenden Amplitudenmodulator 14 werden die eingehenden Bits mit einem bestimmten Modulationsverfahren kodiert. Der darauffolgende Kombinierer 15 kombiniert die Datenströme 41 und 40 mit den unterschiedlichen Modulationsverfahren zu einem resultierenden Datenstrom 42, der nach der OFDM-Modulation über die Antenne 17 gesendet wird.

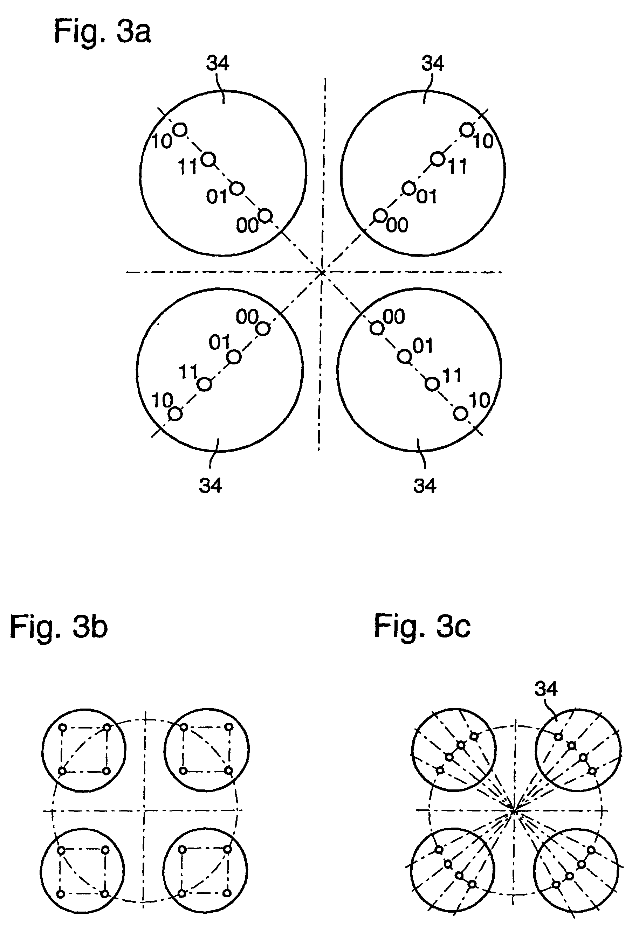

Figur 3 zeigt die Darstellung des Modulationsverfahrens an drei Beispielen. Aufgetragen ist in Figur 3a bis 3c der komplexe Phasenraum. Im komplexen Phasenraum sind die DQPSK-Symbole 34 dargestellt. Im Beispiel Figur 3a wird dem zweiten Datenstrom 41 durch eine Amplitudenmodulation eines von vier möglichen Symbolen, die als Punkte ausgeführt sind, zugeordnet. Die Zuordnung entspricht in diesem Beispiel einer Gray-Kodierung, d. h. um Doppelfehler bei falscher Detektion zu vermeiden wird so durchnumeriert, daß wenn man bei der Detektion um ein Symbol danebenliegt, in jedem Fall ein Bit korrekt empfangen wird. Im Kombinierer 15 werden die DQPSK-Symbole 34 mit den entsprechend zugewiesenen Amplituden des Modulators 14 beaufschlagt. Die daraus resultierenden Signalpunkte sind in Figur 3a dargestellt. Der relative Abstand der Signalpunkte zueinander, der durch die Amplitude des Signals bestimmt ist, beeinflußt die Empfangseigenschaften sowohl vom mobilen als auch stationären Empfänger. So bedeutet eine enge Lage der vier amplitudenmodulierten Signalpunkte zueinander keine oder eine sehr geringe Verschlechterung der mobilen Empfangseigenschaften auf Kosten der stationären Empfangseigenschaften, da ein größerer Signal-Störungsabstand benötigt wird. Dagegen lassen sich bei zunehmendem Abstand der Signalpunkte zueinander, d. h. bei größeren Amplituden, die Empfangseigenschaften vom mobilen und stationären Empfänger gegeneinander abwägen. Dies ermöglicht eine große Flexibilität des Übertragungsverfahrens in Bezug auf gewünschte oder vorgegebene Empfangseigenschaften. Alternativ zu der Amplitudenmodulation aus Figur 3a ist in Figur 3b eine Quadratureamplitudenmodulation in Verbindung mit der DQPSK-Modulation dargestellt. In Figur 3 c wird die Möglichkeit einer Phasenshiftmodulation in Kombination mit der DQPSK-Modulation gezeigt. Alle Modulationskombinationen haben die Eigenschaft, daß die Signalpunkte innerhalb der DQPSK-Symbole liegen. Das bedeutet, daß ein Standard DAB-Empfänger die Signale, innerhalb der von den Symbolen vorgegebenen Rahmen empfangen kann. Das bedeutet auch daß ein normaler DAB-Empänger von der zusätzlichen Modulation nicht beeinflußt wird.

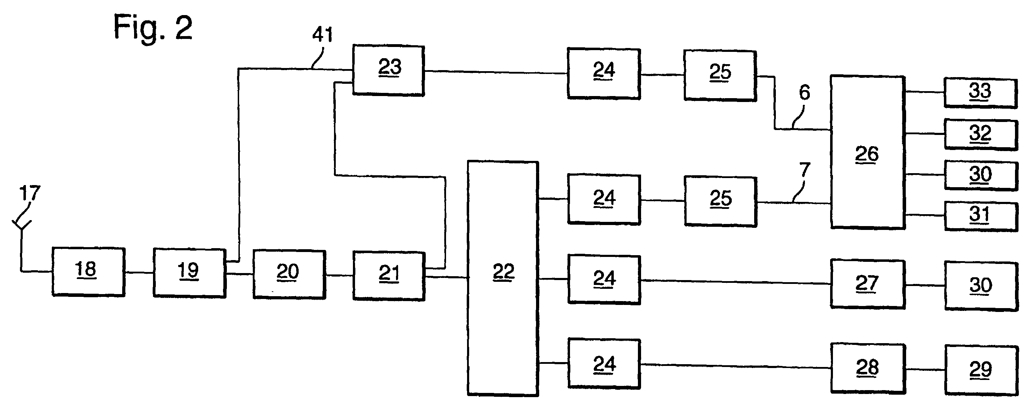

Figur 2 stellt das Schaltschema eines erfindungsgemäßen Empfängers dar. Eingangsseitig ist die Antenne 17 mit dem A/D-Wandler 18 und der Synchronisierung 19 verbunden. Anschließend ist ein schneller Fourriertransformator 20, und ein DQPSK-Demodulator 21 einem DAB-Multiplexer 22 vorgeschaltet. Der DAB-Demultiplexer 22 ist über einen DAB-Decoder 24 sowie einem Audio-Decoder 27 mit der Audiosenke 30 und über einen Paketdemultiplexer 28 mit der Paketdatensenke 29 verbunden. Videodaten werden in einem DVB-Decoder 25 in einem MPEG-Decoder 26 eingespeist, von wo aus sie mit den Audiosenken 30, mobilen Videosenken 32, stationären Videosenken 33, sowie weiteren Datensenken 31 verbunden sind. Nach dem DQPSK-Demodulator 21 zweigt ein Signalzweig zu einem Amplituden-Demodulator 23 ab. Dieser ist über einen DAB-Decoder 24 mit einem DVB-Decoder 25 und dem MPEG-Decoder 26 verbunden.

Über die Antenne 17 wird das OFDM-Symbol empfangen und im A/D-Wandler 18 einer Analog-Digitalwandlung unterzogen. Anschließend erfolgt die Zeit-, Frequenz- und Phasensynchronisation im Synchronisierer 19. Das Datensignal wird von der schnellen Fourier-Transformation 20 zerlegt und im DQPSK-Demodulator 21 demoduliert. Nach dem Demodulator 21 folgen für den mobilen Empfänger die Verarbeitungsschritte wie bei einer konventionellen Videoübertragung. Der stationäre Empfänger verwendet für den Demodulator 23 eine Amplitudenschätzung aus dem Phasenreferenzsymbol nach der Synchronisierung 19, um die Amplitudendemodulation durchzuführen. Hier werden aus der Amplitude des komplexen DQPSK-Symbols die zwei fehlenden Codebits gewonnen. Es folgt die DAB-konforme Kanalkodierung im Decoder 24 und die DVBkonforme äußere Kanaldecodierung. Der Quelldecoder der MPEG-Decoder 26 stellt dem mobilen Empfänger den Low-Definition Teilstrom 7 für das Videosignal zur Verfügung. Zudem erhält er die zugehörigen Audioinformationen und evtl. gesendete Daten. Ein stationärer Empfänger kann mit Hilfe des zusätzlichen Datenstroms 6, Zusatzanteil für Standarddefinition, und eines hierarchischen MPEG-Decoders ein verbessertes Fernsehbild darstellen.

Bei dem erfindungsgemäßen Verfahren wird die volle Kompatibilität mit der bisherigen mobilen Fernsehübertragung über das DAB-Verfahren möglich. Das heißt DAB-Geräte für den mobilen Fernsehempfang können sowohl eine einstufige Standarddefinition als auch die erste Stufe eines hierarchischen Low-Definition/Standarddefinition-Fernsehsignals empfangen und wiedergeben. Es ist wesentlich einfacher mobile Endgeräte zur Videoübertragung für die Bandbreite von 1,5 MHz zu realisieren, als Systeme, die eine größere Bandbreite erforderlich machen. Durch die große Flexibilität der Wahl der Lage der amplitudenmodulierten Signalpunkte im Hinblick auf gewünschte bzw. geforderte Empfangseigenschaften der mobilen und der stationären Empfänger sind bessere Realisierungen möglich.

## Patentansprüche

1. Verfahren zur Vergrößerung der mit einem Multiträgerübertragungsverfahren über Rundfunk übertragenen Datenrate, insbesondere für stationären Empfang, wobei digitale Daten in zwei Datenströme geteilt werden und ein erster Teildatenstrom (40) mit einem ersten Modulationsverfahren (13) moduliert wird, wobei ein zweiter Teildatenstrom (41) mit einem zweiten Modulationsverfahren (14) moduliert wird und wobei beide Teildatenströme vor der Übertragung kombiniert werden, **dadurch gekennzeichnet, dass** beide Teildatenströme (6, 7) zuerst einen DVB-Encoder (8) und dann einen DAB-Encoder (9) zur Bildung eines DAB-Übertragungsrahmens durchlaufen.

2. Verfahren zur Vergrößerung der übertragenen Datenrate über Rundfunk nach Anspruch 1, **dadurch gekennzeichnet, dass** die Daten des zweiten Teildatenstroms (41) einer Amplitudenmodulation oder einer Quadraturamplitudenmodulation oder einer Phase Shift Keying-Modulation unterzogen werden.

3. Verfahren zur Vergrößerung der übertragenen Datenrate über Rundfunk nach Anspruch 1 oder 2, **dadurch gekennzeichnet, dass** die Daten des ersten Teildatenstroms (40) einer DQPSK-Modulation unterzogen werden.

4. Verfahren zur Vergrößerung der übertragenen Datenrate über Rundfunk nach Anspruch 1 bis 3, **dadurch gekennzeichnet, dass** der zweite Teildatenstrom (41) zusätzliche Informationen zum ersten Teildatenstrom (40) enthält.

5. Verfahren zur Vergrößerung der übertragenen Datenrate über Rundfunk nach Anspruch 1 bis 4, **dadurch gekennzeichnet, dass** die digitalen Daten Fernsehbilder enthalten und im ersten Teildatenstrom (40) Daten für das Basisbild und im zweiten Teildatenstrom (41) Daten für ein Standardbild übertragen werden.

6. Sender zur Vergrößerung der übertragenen Datenrate über Rundfunk, wobei der Sender zur Verarbeitung der Audio- (2), Video- (1) und sonstigen Daten (3, 4), Encoder (5, 8, 9, 10), einen Multiplexer (12) sowie einen ersten Modulator (13) aufweist, wobei ein erster Encoder (5) einen ersten und zweiten Teildatenstrom erzeugt und ein zweiter Modulator (14) für den zweiten Teildatenstrom (41) und ein Kombinierer (15) für den ersten und zweiten Teildatenstrom vorhanden ist, **dadurch gekennzeichnet, dass** für beide Teildatenströme (6, 7) für die Codierung zuerst ein DVB-Encoder (8) und dann ein DAB-Encoder (9) vorhanden sind, wobei der Sender derart konfiguriert ist, dass er einen DAB-Übertragungsrahmen bildet.

7. Sender zur Vergrößerung der übertragenen Datenrate über Rundfunk nach Anspruch 6, **dadurch gekennzeichnet, dass** der zweite Modulator ein Amplitudenmodulator oder ein Quadraturamplitudenmodulator oder ein Phase Shift Keying-Modulator ist.

8. Empfänger zum Empfang von digitalen Daten über Rundfunk, wobei der Empfänger einen A/D-Wandler (18), ein Synchronisationsbauteil (19), eine FFT (20), einen ersten Demodulator (21), sowie Demultiplexer (22), Decoder (25, 24, 26, 27, 28) mit Anschlüssen zu den jeweiligen Datensenken (29, 30, 31, 32, 33) aufweist, wobei nach dem ersten Demodulator (21) ein Abzweig für einen zweiten Teildatenstrom (41) in einen zweiten Demodulator (23) vorhanden ist und wobei ein Decoder (26) die Teildatenströme zusammenführt, **dadurch gekennzeichnet, dass** für beide Teildatenströme ein DAB- und ein DVB-Decoder (24, 25) vorgesehen sind, wobei die Teildatenströme zuerst den DAB- und dann den DVB-Decoder (24, 25) durchlaufen.

9. Empfänger von digitalen Daten über Rundfunk nach Anspruch 8, **dadurch gekennzeichnet, dass** der zweite Demodulator (23) ein Amplitudendemodulator oder ein Quadraturamplitudendemodulator oder ein Phase Shift Keying-Demodulator ist.

## Claims

1. Method for increasing the data rate transmitted by broadcast radio using a multicarrier transmission method, particularly for stationary reception, where digital data are divided into two datastreams, and a first subsidiary datastream (40) is modulated using a first modulation method (13), with a second subsidiary datastream (41) being modulated with a second modulating method (14), and where the two subsidiary datastreams are combined before transmission, **characterized in that** the two subsidiary datastreams (6, 7) first pass through a DVB encoder (8) and then through a DAB encoder (9) in order to form a DAB transmission frame.

2. Method for increasing the transmitted data rate by broadcast radio according to Claim 1, **characterized in that** the data in the second subsidiary datastream (41) are subjected to amplitude modulation or to quadrature amplitude modulation or to phase shift keying modulation.

3. Method for increasing the transmitted data rate by broadcast radio according to Claim 1 or 2, **characterized in that** the data in the first subsidiary datastream (40) are subjected to DQPSK modulation.

4. Method for increasing the transmitted data rate by broadcast radio according to Claim 1 to 3, **characterized in that** the second subsidiary datastream (41) contains additional information relating to the first subsidiary datastream (40).

5. Method for increasing the transmitted data rate by broadcast radio according to Claim 1 to 4, **characterized in that** the digital data contain television pictures, and the first subsidiary datastream (40) is used to transmit data for the base picture, and the second subsidiary datastream (41) is used to transmit data for a standard picture.

6. Transmitter for increasing the transmitted data rate by broadcast radio, where the transmitter has encoders (5, 8, 9, 10), a multiplexer (12) and a first modulator (13) in order to process the audio (2), video (1) and other data (3, 4), where a first encoder (5) produces a first and a second subsidiary datastream, and a second modulator (14) for the second subsidiary datastream (41) and a combiner (15) for the first and the second subsidiary datastream are provided, **characterized in that** first a DVB encoder (8) and then a DAB encoder (9) are provided for the coding for the two datastreams (6, 7), with the transmitter being configured such that it forms a DAB transmission frame.

7. Transmitter for increasing the transmitted data rate by broadcast radio according to Claim 6, **characterized in that** the second modulator is an amplitude modulator or a quadrature amplitude modulator or a phase shift keying modulator.

8. Receiver for receiving digital data by broadcast radio, where the receiver has an A/D converter (18), a synchronization component (19), an FFT (20), a first demodulator (21), and also a demultiplexer (22), decoders (25, 24, 26, 27, 28) with connections to the respective data sinks (29, 30, 31, 32, 33), where a branch for a second subsidiary datastream (41) into a second demodulator (23) is provided downstream of the first demodulator (21), and where a decoder (26) combines the subsidiary datastreams, **characterized in that** a DAB decoder and a DVB decoder (24, 25) are provided for the two subsidiary datastreams, with the subsidiary datastreams first passing through the DAB decoder and then through the DVB decoder (24, 25).

9. Receiver for digital data by broadcast radio according to Claim 8, **characterized in that** the second demodulator (23) is an amplitude demodulator or a quadrature amplitude demodulator or a phase shift keying demodulator.

## Revendications

1. Procédé pour augmenter le débit de données transmises par radiodiffusion avec un procédé de transmission multiporteuse, en particulier pour la réception fixe, selon lequel des données numériques sont divisées en deux flux de données, un premier flux de données (40) est modulé avec un premier procédé de modulation (13), un deuxième flux de données (41) est modulé avec un deuxième procédé de modulation (14), les deux flux de données étant combinés avant la transmission,
**caractérisé en ce que**
les deux flux de données (6, 7) traversent tout d'abord un encodeur DVB (8) puis un encodeur DAB (9) pour former un cadre de transmission DAB.

2. Procédé pour augmenter le débit de données transmises par radiodiffusion selon la revendication 1,
**caractérisé en ce que**
les données du deuxième flux partiel de données (41) sont soumises à une modulation d'amplitude ou une modulation d'amplitude en quadrature ou à une modulation Phase Shift Keying.

3. Procédé pour augmenter le débit de données transmises par radiodiffusion selon la revendication 1 ou 2,
**caractérisé en ce que**
les données du premier flux partiel de données (40) sont soumises à une modulation DQPSK.

4. Procédé pour augmenter le débit de données transmises par radiodiffusion selon la revendication 1 à 3,
**caractérisé en ce que**
le deuxième flux partiel de données (41) contient des informations en supplément du premier flux partiel de données (40).

5. Procédé pour augmenter le débit de données transmises par radiodiffusion selon la revendication 1 à 4,
**caractérisé en ce que**
les données numériques contiennent des images de télévision et des données pour l'image de base sont transmises dans le premier flux partiel de données (40) et des données pour une image standard sont transmises dans le deuxième flux partiel de données (41).

6. Emetteur destiné à augmenter le débit de données transmises par radiodiffusion, dans lequel l'émetteur présente, pour le traitement des données audio (2), vidéo (1) et autres (3, 4), des encodeurs (5, 8, 9, 10), un multiplexeur (12) ainsi qu'un premier modulateur (13). avec un premier encodeur (5) produisant un premier et un deuxième flux partiels de données, un deuxième modulateur (14) pour le deuxième flux partiel de données (41) et un combinateur (15) pour le premier et le deuxième flux partiel de données,
**caractérisé en ce que**
pour les deux flux partiels de données (6, 7), tout d'abord un encodeur DVB (8) et ensuite un encodeur DAB (9) sont présents pour le codage, l'émetteur étant configuré de manière qu'il forme un cadre de transmission DAB.

7. Emetteur destiné à augmenter le débit de données transmises par radiodiffusion selon la revendication 6,
**caractérisé en ce que**
le deuxième modulateur est un modulateur d'amplitude ou un modulateur d'amplitude en quadrature ou un Phase Shift Keying Modulator.

8. Récepteur destiné à recevoir des données numériques par radiodiffusion, dans lequel le récepteur présente un convertisseur A/N (18), un composant de synchronisation (19), un FFT (20), un premier démodulateur (21), ainsi que des multiplexeurs (22), des décodeurs (25, 24, 26, 27, 28) munis de connexions qui aboutissent aux drains de données correspondants (29, 30, 31, 32, 33), dans lequel, en aval du premier démodulateur (21) une branche dérivée pour un deuxième flux partiel de données (41) est présente dans un deuxième démodulateur (23), et dans lequel un décodeur (26) réunit les flux partiels de données,
**caractérisé en ce que**
pour les deux flux partiels de données, sont prévus un décodeur DAB et un décodeur DVB (24, 25), les flux partiels de données traversant tout d'abord le décodeur DAB puis le décodeur DVB (24, 25).

9. Récepteur de données numériques par radiodiffusion selon la revendication 8,
**caractérisé en ce que**
le deuxième démodulateur (23) est un démodulateur d'amplitude ou un démodulateur d'amplitude en quadrature ou un Phase Shift Keying Demodulator.
